# EUROPÄISCHE PATENTSCHRIFT

(11) **EP 0 671 107 B1**
(45) Veröffentlichungstag und Bekanntmachung des Hinweises auf die Patenterteilung: **20.05.1998**
(21) Anmeldenummer: 94901838.6
(22) Anmeldetag: 22.11.1993
(51) Int. Cl.: H04N 7/087

(54) **VERFAHREN ZUM EMPFANGEN VON TELETEXTDATEN**
PROCESS FOR RECEIVING TELETEXT DATA
PROCEDE PERMETTANT DE RECEVOIR DES DONNEES DE TELETEXTE

(30) Priorität: 24.11.1992 DE 4239351
(43) Veröffentlichungstag der Anmeldung: 13.09.1995
(73) Patentinhaber: Thomson Consumer Electronics Sales GmbH, 30453 Hannover (DE)
(72) Erfinder: BRÜCKNER, Werner, D-81929 München (DE); EITZ, Gerhard, D-85586 Poing (DE)
(86) Internationale Anmeldenummer: EP9303266
(87) Internationale Veröffentlichungsnummer: WO9413106

(56) Entgegenhaltungen:
- EP-A- 0 343 739
- DE-A- 2 812 435

## Beschreibung

Die Erfindung bezieht sich auf ein Verfahren gemäß dem Oberbegriff des Patentanspruchs 1. Ein derartiges Verfahren ist aus der EP-A-0 343 739 bekannt.

Zur kompatiblen Übertragung von Ergänzungsdaten für höhere Level innerhalb des normalen Fernsehtextzyklus ist es bekannt (DE-C-39 14 697), die Ergänzungsdaten in sogenannten Ergänzungssseiten zu übertragen.

Aus Kompatibilitätsgründen haben die Ergänzungsseiten den gleichen, mit dem Hammingcode (8,4) geschützten Adressrahmen wie die Seiten für die normalen "Level 1"-Seiten. Ein solcher, geschützter Adressrahmen für "Level 1"-Seiten ist aus der EP-A-0 343 739 bekannt. Der Hammingcode ist in der Lage, einen 1-Bit-Fehler innerhalb eines Bytes des Adressrahmens zu erkennen und zu korrigieren; dagegen kann ein Doppelfehler innerhalb eines Bytes nur erkannt, aber nicht korrigiert werden. So können beispielsweise bei einem solchen Doppelfehler in der Reihenadresse alle zugehörigen Ergänzungsdaten nicht mehr der betreffenden Reihe vom Decoder zugeordnet werden, so daß sie verloren gehen. In diesem Fehlerfall muß ein weiterer Einlauf der betreffenden Ergänzungsseite abgewartet werden. Tritt dagegen ein Doppelfehler nur in einem Byte der Ergänzungsdaten selbst auf, so kann dieser Doppelfehler durch die mitübertragenen Fehlerschutzinformationen vollständig und ohne Wartezeit korrigiert werden. Damit erweist sich die in der Teletext-Spezifikation vorgesehene Decodierung des Adressrahmens als Engpaß, welcher die in der vorgenannten Druckschrift für die Ergänzungsdaten vorgesehenen Fehlerschutzmaßnahmen teilweise wieder zunichte macht.

Eine Beseitigung des Engpasses durch Änderung des Adressrahmens kommt aus Kompatibilitätsgründen nicht in Betracht. Hinzu kommt, daß ein verbesserter Fehlerschutz des Adressrahmens eine entsprechend erhöhte Redundanz erfordert, welche die verfügbare Nutzdatenrate verringert bzw. die Wartezeit auf eine gewünschte Teletextseite entsprechend vergrößert.

Die Aufgabe der Erfindung besteht demgegenüber darin, bei einem Verfahren der eingangs erwähnten Art eine höhere Decodierungssicherheit für den Adressrahmen einer Teletextseite, insbesondere einer Seite mit Ergänzungsdaten für höhere Level, ohne zusätzliche Fehlerschutzmaßnahmen zu erreichen.

Diese Aufgabe wird erfindungsgemäß durch die in Patentanspruch 1 angegebenen Merkmale gelöst.

Vorteilhafte Ausgestaltungen und Weiterbildungen des erfindungsgemäßen Verfahrens ergeben sich aus den Unteransprüchen.

Bei dem erfindungsgemäßen Verfahren wird der Engpaß "Adressrahmen" dadurch verbessert, daß die gerade empfangenen, gestörten Daten des Adressrahmens mit den zuvor empfangenen, in einer speziellen Abschätzung prognostizierten Daten miteinander verglichen und ggf. durch die prognostizierten Daten ersetzt werden. Damit ist es einem Teletextdecoder ermöglicht, den Adressrahmen auch bei Störungen, die über den mitübertragenen Fehlerschutz hinausgehen, wieder fehlerfrei zu rekonstruieren.

Die Erfindung wird nachfolgend anhand von in den Zeichnungen dargestellten Ausführungsbeispielen näher erläutert. Dabei zeigen:
- Fig. 1: eine schematische Darstellung eines Teletextdecoders mit der erfindungsgemäßen Adressdecodierung;
- Fig. 2: eine schematische Darstellung eines ersten Ausführungsbeispiels der Adressdecodierung nach Fig. 1 für eine Korrektur von einem oder von zwei Fehlern;
- Fig. 3: eine schematische Darstellung einer Weiterentwicklung der zweiten Ausführungsform nach Fig. 2, und
- Fig. 4: schematische Darstellungen eines ungestörten und eines gestörten Adressrahmens sowie verschiedener Möglichkeiten zur Korrektur des gestörten Adressrahmens.

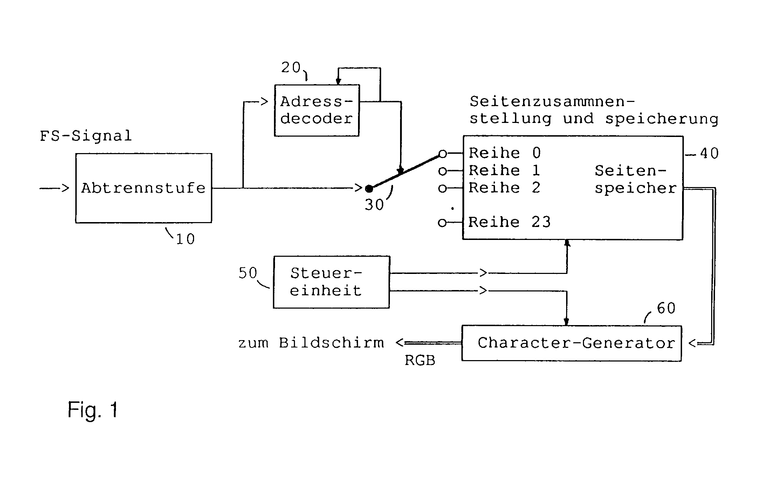

Der in Fig. 1 lediglich schematisch und nur hinsichtlich der zum Verständnis der Erfindung erforderlichen Einzelheiten dargestellte Teletextdecoder weist eine Datenabtrennstufe 10 auf, welche aus dem ankommenden Fernsehsignal den darin enthaltenen Teletext-Datenstrom abtrennt. Der abgetrennte Teletext-Datenstrom wird einerseits einer Adressdecodierung 20 und andererseits einer Verteileinrichtung 30 zugeführt, welche nach Maßgabe einer von der Adressdecodierung 20 gelieferten Adressierinformation den Teletext-Datenstrom an die verschiedenen, den Teletextreihen 0, 1 bis 23 zugeordneten Dateneingängen eines Seitenspeichers 40 zuführt.

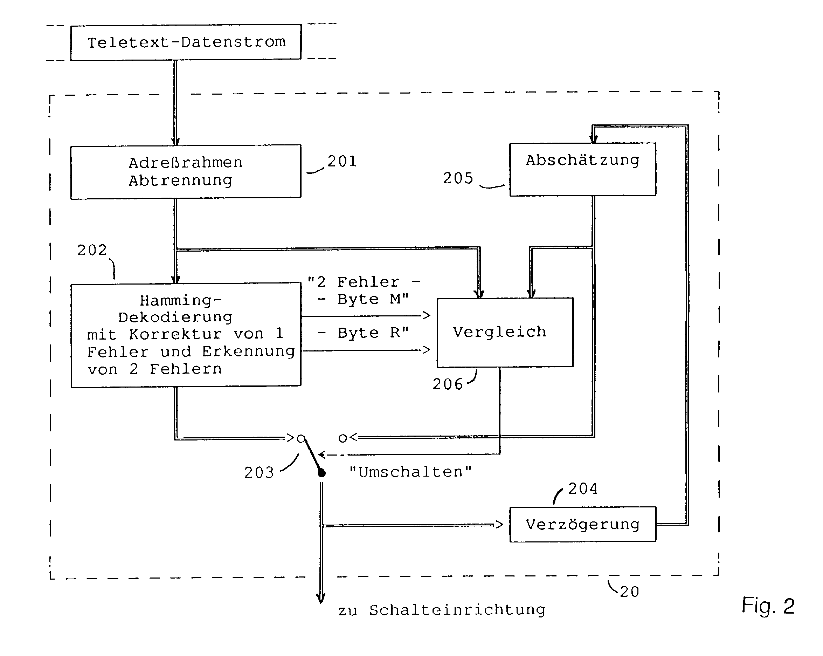

Die Adressdecodierung 20 entnimmt, wie nachfolgend anhand von Fig. 2 noch im einzelnen erläutert wird, aus dem Teletext-Datenstrom eine Adressrahmeninformation, welche decodiert und ggf. einer Fehlerkorrektur unterzogen wird. Die Adressrahmeninformation besagt, daß die nachfolgenden Daten des Teletextdatenstroms einer bestimmten Reihe einer bestimmten Teletextseite zugeordnet sind.

In dem Seitenspeicher 40 werden die einzelnen Teletextseiten reihenweise zusammengestellt und zwischengespeichert. Die zwischengespeicherten Teletextseiten werden aus dem Seitenspeicher 40 unter der Steuerung einer Steuereinheit 50 auf Anforderung des Teletextbenutzers an einen Charakter-Generator 60 ausgelesen, welcher die Teletextseite in ein R-G-B-Bildsignal zur Anzeige auf einem Bildschirm umsetzt.

Der in der Adressdecodierung 20 decodierte Adressrahmen besteht entsprechend dem Teletext-Standard aus zwei Bytes je Teletextreihe und dient zur Signalisierung der Magazin- und Reihenadresse der jeweils nachfolgenden Teletextdaten.

Wie aus dem Blockschaltbild eines ersten Ausführungsbeispiels für eine Adressdecodierung gemäß Fig. 2 im einzelnen hervorgeht, werden aus dem ankommenden Teletext-Datenstrom mittels einer Adressrahmen-Abtrennung 201 die beiden Bytes des Adressrahmens gewonnen und in bekannter Weise einer HammingDecodierung 202 zugeführt. Sind die beiden Bytes M und R mit jeweils maximal einem Fehler pro Byte gestört, so kann die Decodierung 202 diese Fehler anhand des mitgeführten Fehlerschutzes Hamming (8,4) erkennen und korrigieren. Die als richtig erkannten bzw. die korrigierten Bytes werden über einen - im Normalfall geschlossenen - Umschalter 203 zur Weiterleitung an die Verteileinrichtung 30 (Fig. 1) zur Verfügung gestellt. Ferner werden die korrigierten Bytes mittels einer Verzögerung 204 um beispielsweise einige Taktperioden des Teletext-Datenstroms verzögert und einer Abschätzstufe 205 zugeführt. In der Abschätzstufe 205 wird aus dem zuvor empfangenen, decodierten und ggf. Fehler korrigierten Adressrahmen die Magazin- und Reihennummer der nächstfolgenden Teletextreihe prognostiziert, beispielsweise indem die Reihennummer um eins erhöht und die Magazinnummer beibehalten wird. Der so prognostizierte Adressrahmen der nächstfolgenden Teletextreihe wird sowohl einem Vergleicher 206 als auch im zweiten Eingang des Umschalters 203 zugeführt.

Erhält beispielsweise die Abschätzstufe 205 die Adressrahmeninformation "Magazin 2, Reihe 22", so errechnet sie daraus als nächsten Adressrahmen "Magazin 2, Reihe 23". Dagegen wird bei "Magazin 2, Reihe 23" als nächster Adressrahmen "Magazin x, Reihe 0" und danach "Magazin x, Reihe 1" erwartet, wobei der Index "x" bedeutet, daß in diesem Fall keine konkrete Abschätzung für die Nummer des nächstfolgenden Magazins möglich ist. Unter "Magazin" wird die Hunderterstelle der Seitennummer der betreffenden Teletextseite verstanden.

Stellt die Hammingdecodierung 202 in einem oder in beiden Bytes des Adressrahmens einer Teletextreihe einen Doppelfehler (Abweichung an zwei Informationseinheiten eines Bytes) fest, so erfolgt eine entsprechende Signalisierung "zwei Fehler in Byte M" bzw. "zwei Fehler in Byte R" an den Vergleicher 206. Der Vergleicher 206 führt daraufhin einen bitweisen Vergleich zwischen den gestörten und den prognostizierten Bytes des Adressrahmens durch und betätigt den Umschalter 203, falls auch bei dem Vergleich zwei bzw. vier Abweichungen an Informationseinheiten festgestellt werden. Durch das Umschalten des Umschalters 203 wird statt der gestörten die prognostizierte Adressrahmeninformation für die Reihen- und Seitenadressierung des Teletext-Datenstroms freigegeben.

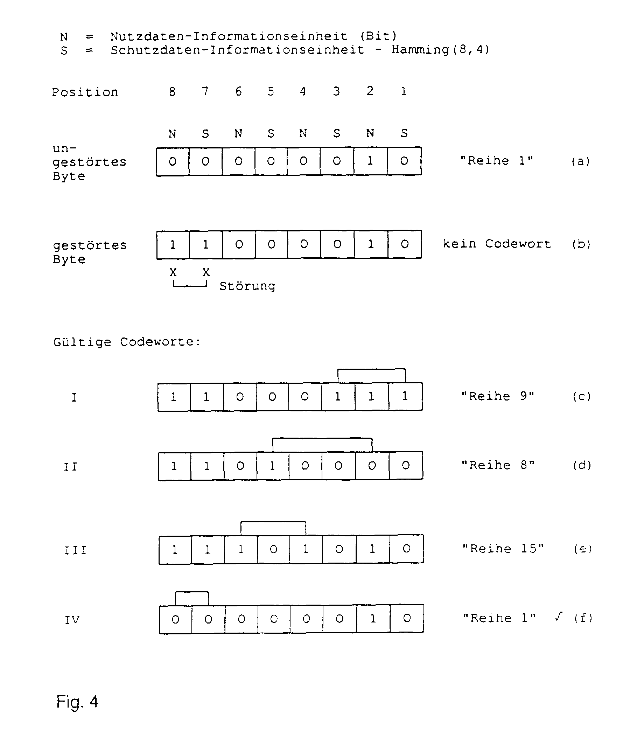

Zur Erläuterung des vorstehend beschriebenen Austausches von empfangenen gegen prognostizierte Adressrahmen wird auf Fig. 4 bezug genommen, welche anhand eines ungestörten und eines gestörten Bytes vier Möglichkeiten von gültigen Korrekturen zeigt. Zum Verständnis hierfür ist folgendes vorauszuschicken:

Theoretisch gibt es für jedes mit Hammingcode (8,4) geschützte und mit zwei beliebigen Fehlern gestörte Byte insgesamt nur vier Möglichkeiten einer plausiblen Fehlerkorrektur. Alle anderen 24 denkbaren Möglichkeiten sind dagegen nicht plausibel. Mit dem erfindungsgemäßen Verfahren ist es nun möglich, aus den vier plausiblen Fehlerkorrekturmöglichkeiten das richtige Codewort mit Hilfe des prognostizierten Adressrahmens zu detektieren. Unter "Codewort" wird, wie aus Fig. 4a beispielsweise ersichtlich ist, der Anteil der Nutzdaten N in jedem Byte verstanden, das nach jedem Nutzdatum N ein Schutzdatum S enthält. Damit weist im Falle des in Fig. 4a dargestellten Bytes mit insgesamt acht Daten das Codewort vier Nutzdaten N auf. Insgesamt können daher 2 ⁴ = 16 verschiedene Codewörter vorkommen. Ist beispielsweise die Information "Reihe 1" (Fig. 4a) an den Positionen 7 und 8 gestört (Fig. 4b), so versucht eine theoretisch denkbare Decodierung zunächst, die Informationseinheiten an den Positionen 1 und 3 (Fig. 4c) zu invertieren, woraus das gültige Codewort "Reihe 9" resultiert. Werden dagegen die Positionen 2 und 5 als vermeintliche Störorte invertiert (Fig. 4d), so ergibt sich das gültige Codewort "Reihe 8". Bei Invertierung der Positionen 4 und 6 (Fig. 4e) ergibt sich das gültige Codewort "Reihe 15" und bei Invertierung der Positionen 7 und 8 (Fig. 4f) ergibt sich wieder das gültige Codewort "Reihe 1". Bei allen anderen Invertierungsmöglichkeiten ergeben sich keine gültigen Codewörter. Da alle vier Möglichkeiten gemäß Figuren 4c bis 4f plausibel sind, "weiß" die Decodierung nicht, welche dieser plausiblen Möglichkeiten auszuwählen ist. Diese Entscheidung läßt sich mit dem erfindungsgemäßen Verfahren treffen, bei welchem nur ein einziger Vergleich der gestörten Information (Fig. 4b) mit der prognostizierten Information "Reihe 1" (Fig. 4a) notwendig ist. Dabei wird festgestellt, daß an nur zwei Informationseinheiten, nämlich Nummer 7 und 8, Unterschiede vorliegen, wohingegen bei allen anderen drei plausiblen Codewörtern die Unterschiede größer, nämlich vier, sind. Als richtige Information erkennt deshalb das erfindungsgemäße Verfahren das Codewort "Reihe 1". Werden beim Vergleich mehr als zwei Unterschiede festgestellt, so ist die empfangene Information entweder mit mehr als zwei Fehlern gestört oder es wird eine falsche Prognose geliefert.

Die oben beschriebene Abschätzung auf die nächstfolgende Teletextreihe führt bei allen Ergänzungsseiten mit Daten für höhere Teletext-Level sowie bei denjenigen "Level 1"-Seiten zu einer richtigen Korrektur der beiden Fehler, bei denen alle Reihen einer Seite nacheinander und lückenlos übertragen werden. Werden dagegen beliebige Reihen einer "Level 1"-Seite nicht gesendet (Adaptive Übertragung) - was bei "Level 1"-Seiten ohne weiteres vorkommen kann - so ist in dem betreffenden Fall keine korrekte Prognose möglich.

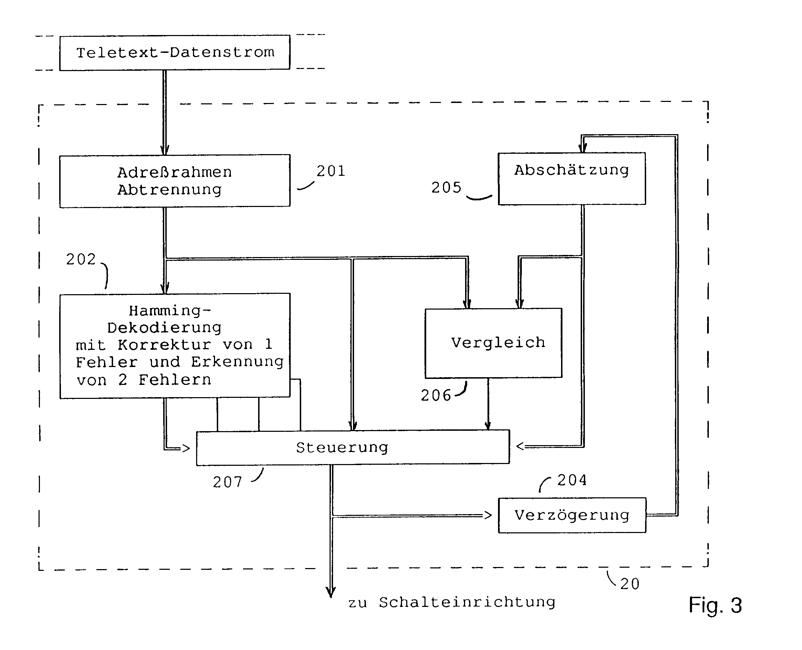

Eine vorteilhafte Weiterentwicklung des erfindungsgemäßen Verfahrens ist anhand von Fig. 3 erläutert. Die Ausführungsform nach Fig. 3 unterscheidet sich von der Ausführungsform nach Fig. 2 dadurch, daß der Umschalter 203 durch eine intelligente Steuerung 207 ersetzt ist. Die Steuerung 207 erhält die korrigierten Daten des Adressrahmens und die Meldung für 0, 1 oder 2 Fehler aus der Hammingcodierung 202, ferner die gestörten Daten aus der Adressrahmenabtrennung 201, die Meldung "Differenz" aus dem Vergleicher 206 sowie die prognostizierten Daten aus der Abschätzstufe 205. Die Steuerung 207 überwacht die Hammingdecodierung 207 und kann durch einen fortlaufenden Vergleich zwischen der etwaigen gestörten und der prognostizierten Adressrahmeninformation feststellen, ob eine Überlastung des Hammingcodes vorliegt. Eine Überlastung tritt immer dann auf, wenn ein Byte des Adressrahmens mit mehr als zwei Fehlern gestört wird. Beispielsweise wird von der Hammingdecodierung 202 eine Störung von drei Fehlern so korrigiert, daß vier Fehler entstehen; eine Störung von vier Fehlern wird dagegen als fehlerfrei oder als mit zwei Fehlern versehen erkannt. In allen Fällen kann von der Steuerung 207 die Diskrepanz zwischen den Meldungen der Decodierung 202 und des Vergleichers 206 festgestellt werden, woraus entsprechende Maßnahmen abgeleitet werden können. Beispielsweise wird bei der Störung von drei Fehlern in einem Byte der Adressrahmeninformation von der Steuerung 207 erkannt, daß die angeblich korrigierte Adressrahmeninformation vier Unterschiede, dagegen die unkorrigierte Adressrahmeninformation nur drei Unterschiede aufweist. In Verbindung mit der Meldung der Decodierung 202 von angeblich nur einem einzigen Fehler erkennt die Steuerung 207 eindeutig, daß der Hammingcode überlastet ist und daß nicht die korrigierte, sondern die prognostizierte Adressrahmeninformation weiter verwendet werden muß.

Die Steuerung 207 kann ferner eine "Level 1"-Seite anhand der Seitennummer feststellen und entsprechende Maßnahmen zur Optimierung des Abschätzvorganges ergreifen. Beispielsweise muß in diesem Falle bei der Abschätzung ggf. mit fehlenden Reihen gerechnet werden, so daß die Prognose noch zusätzlich auf Plausibilität zu prüfen ist.

Eine Verbesserung des erfindungsgemäßen Verfahrens kann ferner dadurch erreicht werden, daß in der Kopfreihe (Reihe 0) von Ergänzungsseiten eine Angabe über die Anzahl der Reihen der betreffenden Ergänzungsseite übertragen wird. Mit dieser Angabe kann bei der Abschätzung in der Stufe 205 verhindert werden, daß bei Ergänzungsreihen mit weniger Reihen als den üblicherweise vorgesehenen 23 Reihen auf solche Reihen gewartet wird, die gar nicht gesendet werden.

Im Falle der parallelen Übertragung von zwei oder mehreren Magazinen als jeweils gesonderter Zyklus (sog. Parallel-Mode) kann für jedes Magazin eine eigene Abschätzungsstufe 205 und Vergleichsstufe 206 vorgesehen sein.

## Patentansprüche

1. Verfahren zum Empfangen von in einem Fernsehsignal übertragenen Teletextdaten, bei dem aus dem Fernsehsignal ein Datenstrom abgetrennt, die zu jeweils einer Teletextseite gehörenden Daten als Teletextreihen gesammelt und die so zusammengestellten Teletextseiten zwischengespeichert werden, wobei zur reihenweisen Adressierung der Teletextseiten ein Adressrahmen aus dem Datenstrom selektiert, decodiert und gegebenenfalls einer Fehlerkorrektur unterzogen wird, **dadurch gekennzeichnet,** daß bei der Fehlerkorrektur des Adressrahmens folgende zusätzliche Schritte durchgeführt werden:
a) Aus dem decodierten und ggf. fehlerkorrigierten Adressrahmen einer Teletextreihe wird der Adressrahmen für die darauffolgende Teletextreihe prognostiziert;
b) der prognostizierte Adressrahmen wird mit dem tatsächlichen empfangenen Adressrahmen der darauffolgenden Teletextreihe verglichen, und
c) falls bei dem Vergleich gemäß Schritt b) und ggf. bei der Decodierung des empfangenen Adressrahmens eine Abweichung an zwei oder mehreren Informationseinheiten eines Bytes festgestellt wird, wird entschieden, daß der prognostizierte Adressrahmen anstelle des empfangenen Adressrahmens zur Adressierung des Datenstroms für die betreffende Teletextreihe zu verwenden ist.

2. Verfahren nach Anspruch 1, **dadurch gekennzeichnet**, daß festgestellt wird, ob Ergänzungsseiten mit Daten für höhere Teletext-Level vorliegen und daß im Falle von Ergänzungsseiten eine festgestellte Abweichung auch von mehr als zwei Informationseinheiten pro Byte zu einer Verwendung des prognostizierten Adressrahmens führt.

3. Verfahren nach Anspruch 2, **dadurch gekennzeichnet,** daß für die Prognostizierung und für die Entscheidung über die Verwendung der prognostizierten Adressrahmen eine spezielle Information innerhalb der Kopfreihe jeder Ergänzungsseite mit Daten für höhere Level ausgewertet wird, welche die Anzahl der Reihen der betreffenden Ergänzungsseite identifiziert.

4. Verfahren nach einem der Ansprüche 1 bis 3, **dadurch gekennzeichnet,** daß bei dem Schritt a) die decodierten und ggf. fehlerkorrigierten Adressrahmen vor der Prognostizierung verzögert werden.

5. Verfahren nach einem der Ansprüche 1 bis 4, **dadurch gekennzeichnet,** daß für die Prognostizierung und für die Entscheidung über die Verwendung der prognostizierten Adressrahmen eine spezielle Ergänzungsseite ausgewertet wird, welche die Reihenfolge der momentan gesendeten Teletextseiten identifiziert.

6. Verfahren nach einem der Ansprüche 1 bis 5, **dadurch gekennzeichnet,** daß - im Falle der parallelen Übertragung von zwei oder mehreren Magazinen als jeweils gesonderte Zyklen in demselben Fernsehsignal-für jedes Magazin gesonderte Prognostizier- und Entscheidungsschritte vorgesehen sind.

7. Verfahren nach einem der Ansprüche 1 bis 6, **dadurch gekennzeichnet,** daß der Adressrahmen zwei Bytes zu je acht Informationseinheiten aufweist.

## Claims

1. A method for receiving teletext data which are transmitted in a television signal, in which a data stream is separated from the television signal, the data which in each case belong to one teletext page are collected as teletext lines and the teletext pages assembled in this way are buffer-stored, wherein, to address teletext pages line by line, an address frame is selected from the data stream, decoded and if necessary subjected to error correction, characterized in that the following additional steps are carried out during the error correction of the address frame:
a) From the decoded and if necessary error-corrected address frame of one teletext line, there is predicted the address frame for the subsequent teletext line;
b) the predicted address frame is compared with the actually received address frame of the subsequent teletext line, and
c) if any deviation is detected in two or more information units of a byte during the comparison in accordance with step b) and possibly during the decoding of the received address frame, a decision is made that the predicted address frame is to be used instead of the received address frame for addressing the data stream for the relevant teletext line.

2. A method according to Claim 1, characterized in that it is detected whether supplementary pages are present with data for a higher teletext level, and in that, in the event of supplementary pages, a detected deviation even of more than two information units per byte leads to use of the predicted address frame.

3. A method according to Claim 2, characterized in that, for the prediction and for the decision on the use of the predicted address frame, specific information within the header line of each supplementary page having data for a higher level is evaluated, which identifies the number of lines in the relevant supplementary page.

4. A method according to any of Claims 1 to 3, characterized in that during the step a) the decoded and possibly error-corrected address frame is delayed, before the prediction.

5. A method according to any of Claims 1 to 4, characterized in that, for the prediction and for the decision on the use of the predicted address frame, a special supplementary page, which identifies the sequence of the teletext pages being transmitted at the moment, is evaluated.

6. A method according to any of Claims 1 to 5, characterized in that - in the event of parallel transmission of two or more magazines as respectively separate cycles in the same television signal - separate prediction and decision steps are provided for each magazine.

7. A method according to any of Claims 1 to 6, characterized in that the address frame has two bytes each with eight information units.

## Revendications

1. Procédé de réception des données de télétexte transmises via un signal TV, par lequel un flux de données est séparé du signal TV, les données appartenant à une page de télétexte sont regroupées sous forme de lignes de télétexte, les pages de télétexte ainsi formées sont provisoirement mémorisées et par lequel un bloc d'adresse servant à l'adressage ligne par ligne des pages de télétexte est extrait du flux de données, décodé et éventuellement soumis à une correction d'erreur, **caractérisé en ce que,** lors de la correction d'erreur du bloc d'adresse, les actions supplémentaires suivantes sont effectuées :
a) un bloc d'adresse pour la prochaine ligne de télétexte sera pronostiqué à partir du bloc d'adresse d'une ligne de télétexte décodé et éventuellement corrigé,
b) le bloc d'adresse pronostiqué sera comparé avec le bloc d'adresse de la prochaine ligne de télétexte effectivement reçu et
c) si, lors de la comparaison effectuée à l'étape b) ou lors du décodage du bloc d'adresse reçu, il est constaté une différence au niveau d'une ou de plusieurs unités d'informations d'un octet, on décidera d'utiliser le bloc d'adresse pronostiqué à la place du bloc d'adresse reçu pour l'adressage du flux de données de la ligne de télétexte concernée.

2. Procédé selon la revendication 1, **caractérisé en ce que** la présence de pages supplémentaires comportant des données destinées à un niveau de télétexte supérieur est déterminée et qu'en présence de ces pages supplémentaires, la détection de différences affectant plus de deux unités d'information par octet entraîne l'utilisation du bloc d'adresse pronostiqué.

3. Procédé selon la revendication 2, **caractérisé en ce q**u'une information spécifique, incluse dans la ligne d'en-tête de chaque page supplémentaire comportant des données destinées à un niveau de télétexte supérieur, indique le nombre de lignes composant les pages supplémentaires concernées. Cette information est prise en compte pour pronostiquer un bloc d'adresse et décider de l'utilisation du bloc d'adresse pronostiqué.

4. Procédé selon l'une des revendications 1 à 3, **caractérisé en ce que,** lors de l'étape a), les blocs d'adresse décodés et éventuellement corrigés sont temporisés avant le pronostic.

5. Procédé selon l'une des revendications 1 à 4, **caractérisé en ce qu'**une page supplémentaire spécifique identifie la séquence de pages de télétexte déjà transmises. Cette page est prise en compte pour pronostiquer un bloc d'adresse et décider de l'utilisation du bloc d'adresse pronostiqué.

6. Procédé selon l'une des revendications 1 à 5**, caractérisé en ce qu**'en cas de transmission parallèle de deux ou de plusieurs magasins à chaque fois en tant que cycle spécifique dans le même signal TV, on prévoit pour chaque magasin une étape spécifique de pronostic et de décision.

7. Procédé selon l'une des revendications 1 à 6, **caractérisé en ce que** le bloc d'adresse comporte deux octets composés chacun de huit unités d'information.
